# EUROPEAN PATENT SPECIFICATION

(11) **EP 2 037 551 B1**
(45) Date of publication and mention of the grant of the patent: **04.04.2018**
(21) Application number: 08164131.8
(22) Date of filing: 11.09.2008
(51) Int. Cl.: H02G 3/18, H02G 3/22

(54) **Floor passage**
Bodendurchgang
Passage de plancher

(30) Priority: 13.09.2007 SE 0702041
(43) Date of publication of application: 18.03.2009
(73) Proprietor: Schneider Electric Industries SAS, 92500 Rueil-Malmaison (FR)
(72) Inventor: Eriksson, Staffan, 611 56, NYKÖPING (SE)
(74) Representative: Groth & Co. KB

(56) References cited:
- DE-U- 1 874 061
- GB-A- 2 264 731
- US-A1- 2003 079 897
- US-A1- 2007 277 457

## Description

### Technical Field

The present invention relates to the area of floor passages or grommets for electrical cables.

### Background of the Invention

In office environments and lecture halls, there is a need of providing electrical wiring under raised floors, which are elevated in order to provide a space for the wiring. Grommets are used for being able to bring up cabling through such a floor at fixed locations in the floor. The background of the present invention is that grommets have been specialized to the respective fields of application thereof and have in that connection had entirely different aesthetics, have had different quality as well as varying function from different manufacturers. Thus, the background of the present invention is an aim to provide an improved floor passage, which can be used for varying fields of application.

Floor passages from elevated raised floors under which miscellaneous wiring is made are present since earlier.

US 2007/0277457 shows such a floor passage according to the preamble of claim 1. US 6 632 999 shows a floor passage for use in buildings and office environments where air-conditioning is carried out in a subjacent floor space where also wirings are arranged. The floor passage is formed as a frame connected to the floor, in which frame a number of bristle seals are arranged in order to in a simple way be able to pull up cables through the grommet and simultaneously limit outflowing conditioned air.

Furthermore, cable grommets are found intended for table surfaces, shelves and panels in office environments.

For instance, in US 7 141 744, a panel grommet is seen for cables, which is formed as a lowered container in two halves which has been fitted into a circular hole of the panel. The cables may be pulled in through the container through holes between the parts thereof and up through the container. When the cables are not connected, these may be stored in the container, which also may be covered by a cover.

From US 4 688 491, a table grommet is seen in the form of a frame lowered in the table top, in which frame a cover having a sliding hatch is arranged for being able to enable that electrical cables are pulled through the table top.

All of these known devices enable that electrical cables are pulled through a panel of some type, but have the disadvantage that the grommets cannot be utilized for more applications than exactly for bringing electrical cables through a plane panel or the like.

### The Object of the invention

The present invention aims at providing an improved floor passage for electrical cables, which grommet is formed in a way that enables that it easily can be adapted to a plurality of applications.

### Summery of the Invention

By the present invention, such as this appears in the independent claim, the above-mentioned object is fulfilled. Suitable embodiments of the invention are defined in the dependent claims.

The invention relates to a floor passage comprising an insert frame provided with a centrally placed hole. Said insert frame may be circularly or rectangularly shaped and joins against the upperside of a floor surface by a collar, which may be provided with a seal in order to prevent that moisture penetrates down under the floor. The insert frame is provided with an attachment device for fastening in a floor hole, the upperside of the insert frame being provided with a fold for the mounting of a cover formed to cover said hole. The cover comprises two cover parts, a first outer cover part and a second outer cover part, which both cover parts are formed to enclose a cover object. The cover object is arranged to co-operate with said cover parts to a vertical fixation as well as closure of a central hole in the cover, all cover parts as well as the cover object being formed to be assembled upon or before mounting in the insert frame. The cover parts are fastened in the fold of the insert frame by means of screws, which have a design enabling that they always remain in the cover parts.

A suitable embodiment is to form the hole of the insert frame circular. In connection with this embodiment, it is suitable that the cover having the two outer cover parts are formed to be connected to each other along a diameter in the circular hole.

An additional suitable embodiment is that the cover as such is circularly shaped.

The cover object of the cover is preferably formed with a rotation preventing member in the form of an edge.

In order to vertically fix the cover object of the cover, the cover object, e.g., an inner cover part, is provided with an edge groove, which is arranged to be pushed in over the corresponding edge flanges of the outer cover parts. Alternatively, the cover object may be provided with an edge flange, which is arranged to be pushed in to a corresponding edge groove of the outer cover parts.

In order to avoid leakage through the floor passage, it is advantageous as is seen in an embodiment to provide the outer cover parts with a sealing part each, which sealing parts are arranged to join and in addition be pressed against each other when the outer cover parts are mounted in the insert frame in order to seal the joints of the cover so that water and dust are prevented from penetrating down through the grommet. These sealing parts may in this connection each one be mounted in a sealing fold on the underside of the respective cover part.

A suitable embodiment of the floor passage is that the insert frame is provided with an attachment mechanism in the form of at least one radially movable clamping jaw, preferably four clamping jaws, which clamping jaw is arranged to be displaced outward toward the edge of the floor hole upon manoeuvre in order to fasten the grommet in the floor hole. In case the hole of the insert frame is circular, the clamping jaw will be pressed radially outward.

In an additional embodiment, the attachment mechanism is axially movable and arranged to be displaced axially in relation to the insert frame so that the fold of the insert frame is pulled against the floor upon mounting.

The cover object placed between the two outer cover parts of the floor passage is formed either as an inner cover part, as an outlet post or as a cable tie. When the cover object is formed as an inner cover part, the same is mounted on the same level as the outer cover parts and also on the same level as the floor flange in order to minimize the risk of stumbling. Furthermore, the inner cover part is connected with one of the outer cover parts via a line so that the inner cover part not should be lost when another type of cover object is used.

When the cover object is formed as a cable tie, the same consists of two equal parts which makes it possible to use already contacted cables. Furthermore, the cable tie is formed with an attachment of a protective tube, which gives extra protection for the cables that are pulled through the cable tie. In addition, the cable tie may be provided with a strain relief.

Also other designs of the cover object are feasible within the scope of the invention.

### Brief Description of the Drawings

The invention will now be described in more detail by means of embodiment examples, reference being made to the accompanying drawings, where
- figure 1: shows an exploded diagram of an embodiment according to the present invention,
- figure 2: shows a side view of an embodiment according to the present invention mounted in a floor,
- figure 3: shows a perspective view of an embodiment without cover as well as corresponding to the embodiment according to fig. 2,
- figure 4: shows a perspective view of the embodiment according to fig. 3 with cover mounted,
- figure 5: shows a perspective view in section of the invention according to fig. 4 with the cover mounted,
- figure 6: shows an exploded diagram of an embodiment having an outlet post according to the invention,
- figure 7: shows a perspective view of an embodiment having an outlet post mounted,
- figure 8: shows an exploded diagram of an embodiment having a cable tie according to the invention,
- figure 9: shows an embodiment according to the invention having a cable tie mounted.

### Description of the Invention

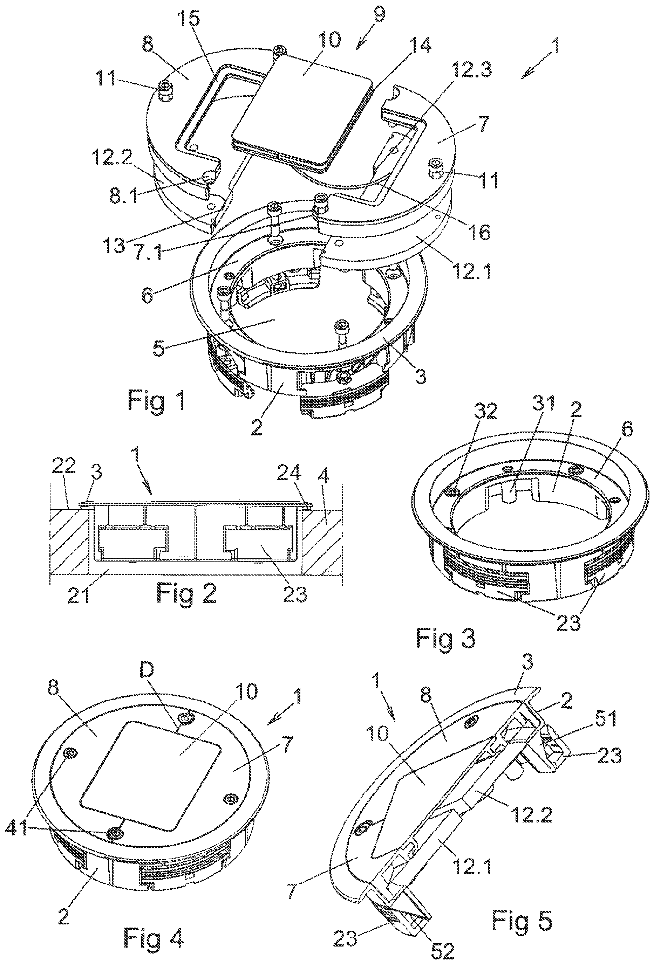

Figure 1 shows an exploded diagram through a floor passage 1 according to a first embodiment of the invention. The floor passage comprises an insert frame 2, which is provided with a floor flange 3 overlapping the edge 4 of a floor hole, see fig. 2. The insert frame 2 is furthermore provided with a hole 5 through which electrical cables can be pulled up through the insert frame 2 and accordingly the floor. The insert frame is in addition provided with a lowered fold 6 for the mounting of a cover, which covers the entire hole 5. The cover consists of a first outer cover part 7 and a second outer cover part 8, which cover parts 7, 8 surround a cover object 9, which in figure 1 is formed as an inner cover part 10. The outer cover parts 7, 8 together with the cover object 9 form the cover, which after joining of the parts can be mounted in the fold 6 by means of a screw 11 through each cover part. Upon joining of the cover parts 7, 8, guides 7.1 are inserted in guiding grooves 8.1, which are placed in the surfaces facing each other of the two cover parts 7, 8. Each cover part is also provided with a subjacent sealing part 12.1, 12.2 each, which in mounting joins end-to-end with each other. The sealing parts may join against each other along the entire facing edge surface or be provided with a central slot 12.3, as the figure shows. The sealing parts 12.1, 12.2 are glued in the cover parts 7, 8 in a sealing fold 13 intended therefor. The cover object 9 is provided with an edge groove 14 going around in the edge in order to be possible to be pushed in over edge flanges 15 of the outer cover parts. Thus, the edge groove and the sealing folds will form an additional seal in the form of a labyrinth seal between the cover object and the two cover parts when the parts are mounted. As is seen in the figure, the cover object is quadratically formed, which represents that the cover object can assume four different positions between the cover parts as well as that each position is locked in the direction of rotation by the edges thereof.

As is also seen in figure 1, the inner cover part 10 is connected to an outer cover part 7 via a line 16 in order to clamp the inner cover part when another cover object is connected. This line 16 may also be carried out as an earth cable in case some one of the parts needs to be earthed.

Even if the embodiment in figure 1 shows a circular insert frame 2, a circular floor flange 3, a circular hole 5, a circular fold 6 and a circular cover as well as a quadratic cover object 9, the individual geometrical shapes of these parts may be different within the scope of the invention. For instance, the cover object may be circularly shaped with a possibility of being steplessly turned between the cover parts as well as provided with some form of locking mechanism for a selected position. The insert frame may also be rectangularly or quadratically formed.

Figure 2 shows the floor passage 1 mounted in a floor hole 21 in a section from the side where the floor flange 3 abuts against the floor surface 22. The insert frame 2 is provided with an attachment device in the form of one or more clamping jaws 23, which are horizontally movable, and are, in the case of a circular hole, radially movable. The clamping jaws will move horizontally outward when mounting screws placed in the circular fold are screwed downward in the insert frame 2. In addition, the clamping jaws 23 are arranged to move in the vertical direction when said mounting screws are screwed downward so that the insert frame 2 is pulled against the floor surface 22 for an optimum seal. The figure also shows a floor seal 24 placed between the floor flange 3 and the floor surface 22.

Figure 3 shows the insert frame 2, which in the fold 6 thereof is provided with on one hand screw taps 31 for the fastening of the outer cover parts 7, 8 by means of the screws 11 thereof. The fold 6 is furthermore provided with fastening screws 32, which pull the clamping jaws 23 upward, the same simultaneously sliding outward, which will be shown under figure 5.

Figure 4 shows the floor passage 1 with the cover parts 7, 8 and the inner cover part 10 mounted in the insert frame 2 by means of cover screws 41. The figure also shows that the cover parts 7, 8 join to each other along a diagonal D to the circular insert frame 2, which represents that the two outer cover parts have the same geometrical shape. When the inner cover part 10 is mounted, the floor passage is inactivated and connects to the floor surface in a plane and tight way. The seal is provided by the labyrinth seal between the inner cover part and the outer cover parts as well as by the subjacent sealing parts, which connect against each other. In addition, the seal may be increased by the floor seal shown in figure 2 between floor flange and floor surface.

Figure 5 shows a section through the floor passage 1 with the inner cover part 10 mounted between the two outer cover parts 7, 8 of the insert frame 2. Also the subjacent sealing parts 12.1, 12.2 are seen in the figure. As was mentioned in connection with figure 3, the clamping jaws 23 are mounted on the insert frame 2 so that these slide outward when the fastening screws are tightened. This is provided by the fact that the clamping jaws 23 are mounted on oblique sliding surfaces 51, 52, which entails that a displacement of the clamping jaws 23 against the floor flange 3 simultaneously provides a radial displacement outward of the clamping jaws 23.

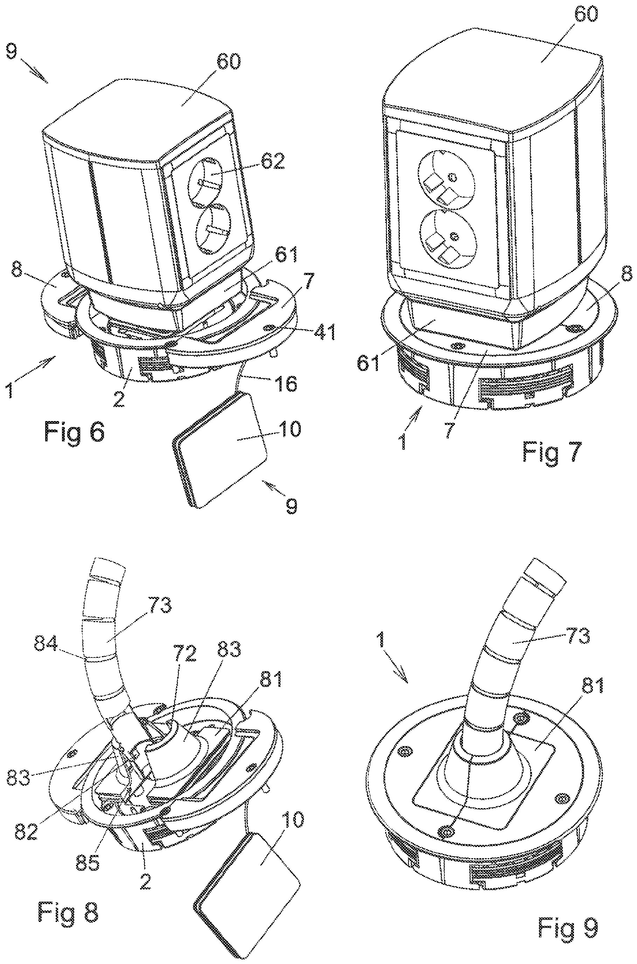

Figure 6 shows how the floor passage 1 is activated in order to house an outlet post 60, which in the foot 61 thereof is provided with a socket, which in shape and function is equal to the socket of the inner cover part 10 in order to replace the inner cover part as an alternative cover object 9 in of the cover. The outlet post may be shaped in a number of different ways with varying types of voltage outlets 62 and breakers. Also computer networks may be placed in these outlet posts.

In installation of an outlet post 60 as cover object 9 instead of the inner cover part 10, first the four cover screws 41 of the cover are backed out, the cover being lifted out of the insert frame 2. The two outer cover parts 7, 8 are pulled apart and the inner cover part 10 is taken out and is put down through the hole of the insert frame 2 and becomes hanging in the line 16 thereof. After that, the two outer cover parts 8, 9 are mounted on the foot 61 of the outlet post and are pushed in until they abut against each other whereupon the outlet post and the cover parts are put into the fold 6 of the insert frame, and the four cover screws again being tightened. These four screws are each one provided with end stops in order to avoid that they fall out of the screw holes thereof.

Figure 7 shows the floor passage 1 when an outlet post 60 is mounted. By the fact that the cover object is quadratically formed, the outlet post can be orientated in four different locked directions. The foot 61 of the outlet post joins in this connection sealingly against the two outer cover parts 7, 8. Simultaneously, the inner cover part hangs in the line thereof under the grommet, not shown in the figure.

Figure 8 shows an alternative mounting of a cover object in the floor passage 1 in the form of a cable tie 81, which correspondingly is provided with a socket that in shape and function is equal to the socket of the inner cover part 10 in order to replace the inner cover part as an alternative cover object of the cover. To the circular grommet 72 of the cable tie, a cable collection duct 73 is connected through which miscellaneous cabling is brought up through the floor and out to the different users in order to directly be connected to fixed connectors of the cabling.

Mounting and dismounting of the cable tie 81 takes place correspondingly as mounting and dismounting of the outlet post shown in figure 6. However, the cable tie is formed in two cone parts 83 in order to enable insertion of the cabling with the fixedly mounted connectors thereof. The cable tie is in addition provided with a strain relief 82 in the form of a hook, which is inserted through one of a plurality of slots 84 of the cable collection duct 73. For the mounting of the cabling, the same, which already runs through the cable collection duct 73, is brought up through the hole of the insert frame 2, the two cone parts 83 of the cable tie 81 being laid around the cable collection duct 73 and the strain relief 82 of one the parts is inserted into a suitable slot 84. After that, the mounting continues according to what has previously been described. The two cone parts 83 are in addition provided with guiding elements 85 so that the parts should fit in right opposite each other.

Figure 9 shows the final mounting of the two-part cable tie 81 as cover object in the floor passage 1. The figure does however not show any cabling through the cable collection duct 73, but in this embodiment, a cabling is normally always pulled up through the floor passage and the cable collection duct connected thereto.

## Claims

1. Floor passage (1) comprising an insert frame (2) provided with a centrally placed hole (5), which insert frame (2) is provided with an attachment device for fastening in a floor hole (21), the upper side of the insert frame (2) being provided with a fold (6) for the mounting of a cover (7, 8, 9) formed to cover said hole (5), the cover (7, 8, 9) comprising a first outer cover part (7) and a second outer cover part (8), which two cover parts (7, 8) are formed in order to surround a cover object (9), which is arranged to co-operate with said cover parts (7, 8) to a vertical fixation in the cover (7, 8, 9), all cover parts (7, 8) as well as the cover object (9) being formed to be assembled in mounting in the fold (6) of the insert frame (2), and that the cover object (9) is provided with an edge groove (14), which is arranged to be pushed in over corresponding edge flanges (15) of the outer cover parts (7, 8) or that the cover object (9) is provided with an edge flange, which is arranged to be pushed into a corresponding edge groove of the outer cover parts (7, 8), **characterized in that** the groove/flange of the cover object (9) co-operates with the flange/groove of the outer cover parts (7, 8) to form a seal in the form of a labyrinth seal between the cover object (9) and the two cover parts when the parts are mounted and that the cover object (9) closes a central hole in the cover, all cover parts (7, 8) as well as the cover object (9) are assembled upon or before mounting in the insert frame (2) and that the flanges/grooves of the cover object (9) and the cover parts (7, 8) are formed such that the cover object (9) is formed to provide an inner cover part (10, 81) to be mounted on the same level as and between the two cover parts (7, 8) of the floor passage (1).

2. Floor passage according to claim 1, **characterized in that** the hole (5) of the insert frame (2) is circularly shaped.

3. Floor passage according to claim 2, **characterized in that** the two outer cover parts (7, 8) are formed to be joined to each other along a diameter in the circular hole (5).

4. Floor passage according to any one of claims 1-3, **characterized in that** the cover (7, 8, 9) is circular.

5. Floor passage according to any one of claims 1-4, **characterized in that** the cover object (9) is formed with a rotation preventing member, for instance in the form of an edge.

6. Floor passage according to any one of claims 1-5, **characterized in that** the outer cover parts (7, 8) are provided with a sealing part (12.1, 12.2) each, which sealing parts are arranged to join against each other when the outer cover parts (7, 8) are mounted in the insert frame (2).

7. Floor passage according to claim 6, **characterized in that** the sealing parts (12.1, 12.2) each one are mounted in a sealing fold (13) on the underside of the respective cover part (7, 8).

8. Floor passage according to any one of claims 1-7, **characterized in that** the attachment device consists of at least one horizontally movable clamping jaw (23), which is arranged to be displaced outward against the edge (4) of the floor hole (21) upon the maneuver thereof in order to fasten the grommet (1) in the floor hole (21).

9. Floor passage according to claim 8, **characterized in that** the clamping jaw (23) is axially movable and arranged to be displaced axially in relation to the insert frame (2) so that the fold (3) thereof is pulled against the floor (22) in mounting.

10. Floor passage according to any one of claims 1-9, **characterized in that** the cover object (9) is formed as an outlet post (60) intended to be mounted between the two cover parts (7, 8) of the floor passage (1).

11. Floor passage according to any one of claims 1-9, **characterized in that** the cover object (9) is formed as a divisible cable tie (81) intended to be mounted between the two cover parts (7, 8) of the floor passage (1).

12. Floor passage according to claim 11, **characterized in that** at least one part of the cable tie (81) is provided with a strain relief (82).

## Patentansprüche

1. Bodendurchgang (1), umfassend einen Einsetzrahmen (2), der mit einem zentralen platzierten Loch (5) versehen ist, wobei der Einsetzrahmen (2) mit einer Befestigungsvorrichtung zur Befestigung in einem Bodenloch (21) versehen ist, wobei die Oberseite des Einsetzrahmens (2) mit einer Falte (6) zur Montage einer Abdeckung (7, 8, 9) versehen ist, die gebildet ist, um das Loch (5) abzudecken, wobei die Abdeckung (7, 8, 9) einen ersten äußeren Abdeckungsteil (7) und einen zweiten äußeren Abdeckungsteil (8) umfasst, wobei die beiden Abdeckungsteile (7, 8) gebildet sind, um ein Abdeckungsobjekt (9) zu umgeben, das eingerichtet ist, mit den Abdeckungsteilen (7, 8) für eine vertikale Fixierung in der Abdeckung (7, 8, 9) zusammenzuwirken, wobei alle Abdeckungsteile (7, 8) sowie das Abdeckungsobjekt (9) gebildet sind, um in der Montage in der Falte (6) des Einsetzrahmens (2) zusammengesetzt zu werden, und dass das Abdeckungsobjekt (9) mit einer Randrille (14) versehen ist, die eingerichtet ist, über entsprechenden Randflanschen (15) der äußeren Abdeckungsteile (7, 8) eingeschoben zu werden, oder dass das Abdeckungsobjekt (9) mit einem Randflansch versehen ist, der eingerichtet ist, in eine entsprechende Randrille der äußeren Abdeckungsteile (7, 8) eingeschoben zu werden, **dadurch gekennzeichnet, dass** die Rille/der Flansch des Abdeckungsobjekts (9) mit dem Flansch/der Rille der äußeren Abdeckungsteile (7, 8) zusammenwirkt, um eine Dichtung in der Form einer Labyrinthdichtung zwischen dem Abdeckungsobjekt (9) und den beiden Abdeckungsteilen zu bilden, wenn die Teile montiert sind, und dass das Abdeckungsobjekt (9) ein zentrales Loch in der Abdeckung schließt, wobei alle Abdeckungsteile (7, 8) sowie das Abdeckungsobjekt (9) bei oder vor der Montage im Einsetzrahmen (2) zusammengesetzt werden, und dass die Flansche/Rillen des Abdeckungsobjekts (9) und der Abdeckungsteile (7, 8) derart gebildet sind, dass das Abdeckungsobjekt (9) gebildet ist, um einen inneren Abdeckungsteil (10, 81) bereitzustellen, um auf derselben Ebene wie die beiden Abdeckungsteile (7, 8) des Bodendurchgangs (1) und zwischen diesen montiert zu werden.

2. Bodendurchgang nach Anspruch 1, **dadurch gekennzeichnet, dass** das Loch (5) des Einsetzrahmens (2) kreisförmig geformt ist.

3. Bodendurchgang nach Anspruch 2, **dadurch gekennzeichnet, dass** die beiden äußeren Abdeckungsteile (7, 8) gebildet sind, um entlang eines Durchmessers im kreisförmigen Loch (5) miteinander verbunden zu werden.

4. Bodendurchgang nach einem der Ansprüche 1 bis 3, **dadurch gekennzeichnet, dass** die Abdeckung (7, 8, 9) kreisförmig ist.

5. Bodendurchgang nach einem der Ansprüche 1 bis 4, **dadurch gekennzeichnet, dass** das Abdeckungsobjekt (9) mit einem Drehungsverhinderungselement, beispielsweise in der Form eines Rands, gebildet ist.

6. Bodendurchgang nach einem der Ansprüche 1 bis 5, **dadurch gekennzeichnet, dass** die äußeren Abdeckungsteile (7, 8) jeweils mit einem Dichtungsteil (12.1, 12.2) versehen sind, wobei die Dichtungsteile eingerichtet sind, aneinander anzuliegen, wenn die äußeren Abdeckungsteile (7, 8) im Einsetzrahmen (2) montiert sind.

7. Bodendurchgang nach Anspruch 6, **dadurch gekennzeichnet, dass** die Dichtungsteile (12.1, 12.2) jeweils einer in einer Dichtungsfalte (13) an der Unterseite des jeweiligen Abdeckungsteils (7, 8) montiert sind.

8. Bodendurchgang nach einem der Ansprüche 1 bis 7, **dadurch gekennzeichnet, dass** die Befestigungsvorrichtung aus mindestens einer horizontale bewegbaren Klemmbacke (23) besteht, die eingerichtet ist, nach außen gegen den Rand (4) des Bodenlochs (21) beim Manövrieren davon verschoben zu werden, um die Tülle (1) im Bodenloch (21) zu befestigen.

9. Bodendurchgang nach Anspruch 8, **dadurch gekennzeichnet, dass** die Klemmbacke (23) axial bewegt werden kann und eingerichtet ist, axial in Bezug auf den Einsetzrahmen (2) derart verschoben zu werden, dass die Falte (3) davon gegen den Boden (22) bei der Montage gezogen wird.

10. Bodendurchgang nach einem der Ansprüche 1 bis 9, **dadurch gekennzeichnet, dass** das Abdeckungsobjekt (9) als Steckdose (60) gebildet ist, die zwischen den beiden Abdeckungsteilen (7, 8) des Bodendurchgangs (1) zu montieren ist.

11. Bodendurchgang nach einem der Ansprüche 1 bis 9, **dadurch gekennzeichnet, dass** das Abdeckungsobjekt (9) als teilbarer Kabelbinder (81) gebildet ist, der zwischen den beiden Abdeckungsteilen (7, 8) des Bodendurchgangs (1) zu montieren ist.

12. Bodendurchgang nach Anspruch 11, **dadurch gekennzeichnet, dass** der mindestens eine Teil des Kabelbinders (81) mit einer Zugentlastung (82) versehen ist.

## Revendications

1. Passage de plancher (1) comprenant un cadre d'insertion (2) pourvu d'un trou (5) situé centralement, lequel cadre d'insertion (2) étant pourvu d'un dispositif de fixation destiné à être attaché dans un trou de plancher (21), le côté supérieur du cadre d'insertion (2) étant pourvu d'un collier (6) pour le montage d'un recouvrement (7, 8, 9) formé de manière à recouvrir ledit trou (5), le recouvrement (7, 8, 9) comprenant une première partie de recouvrement extérieure (7) et une deuxième partie de recouvrement extérieure (8), lesquelles deux parties de recouvrement (7, 8) étant formées de manière à entourer un objet de recouvrement (9) qui est prévu pour coopérer avec lesdites parties de recouvrement (7, 8) au niveau d'une fixation verticale dans le recouvrement (7, 8, 9), toutes les parties de recouvrement (7, 8) ainsi que l'objet de recouvrement (9) étant formés de manière à être assemblés par montage dans le collier (6) du cadre d'insertion (2), et l'objet de recouvrement (9) étant pourvu d'une gorge latérale (14) qui est prévue pour être poussée par-dessus des brides latérales correspondantes (15) des parties de recouvrement extérieures (7, 8) ou l'objet de recouvrement (9) étant pourvu d'une bride latérale qui est prévue pour être poussé dans une gorge latérale correspondante des parties de recouvrement extérieures (7, 8), **caractérisé en ce que** la gorge/bride de l'objet de recouvrement (9) coopère avec la bride/gorge des parties de recouvrement extérieures (7, 8) pour former un joint en forme de joint à labyrinthe entre l'objet de recouvrement (9) et les deux parties de recouvrement lorsque les parties sont montées et **en ce que** l'objet de recouvrement (9) ferme un trou central dans le recouvrement, toutes les parties de recouvrement (7, 8) ainsi que l'objet de recouvrement (9) sont assemblés lors du montage ou avant le montage dans le cadre d'insertion (2) et **en ce que** les brides/gorges de l'objet de recouvrement (9) et des parties de recouvrement (7, 8) sont formées de telle sorte que l'objet de recouvrement (9) soit formé de manière à fournir une partie de recouvrement intérieure (10, 81) destinée à être montée au même niveau que les deux parties de recouvrement (7, 8) du passage de plancher (1) et entre celles-ci.

2. Passage de plancher selon la revendication 1, **caractérisé en ce que** le trou (5) du cadre d'insertion (2) présente une forme circulaire.

3. Passage de plancher selon la revendication 2, **caractérisé en ce que** les deux parties de recouvrement extérieures (7, 8) sont formées de manière à être réunies l'une à l'autre le long d'un diamètre dans le trou circulaire (5).

4. Passage de plancher selon l'une quelconque des revendications 1 à 3, **caractérisé en ce que** le recouvrement (7, 8, 9) est circulaire.

5. Passage de plancher selon l'une quelconque des revendications 1 à 4, **caractérisé en ce que** l'objet de recouvrement (9) est formé avec un organe empêchant la rotation, par exemple sous la forme d'un bord.

6. Passage de plancher selon l'une quelconque des revendications 1 à 5, **caractérisé en ce que** les parties de recouvrement extérieures (7, 8) sont pourvues chacune d'une partie d'étanchéité (12.1, 12.2), lesquelles parties d'étanchéité étant prévues pour être réunies l'une à l'autre lorsque les parties de recouvrement extérieures (7, 8) sont montées dans le cadre d'insertion (2).

7. Passage de plancher selon la revendication 6, **caractérisé en ce que** les parties d'étanchéité (12.1, 12.2) sont chacune montées dans un collier d'étanchéité (13) sur le côté inférieur de la partie de recouvrement respective (7, 8).

8. Passage de plancher selon l'une quelconque des revendications 1 à 7, **caractérisé en ce que** le dispositif de fixation est constitué d'au moins une mâchoire de serrage mobile horizontalement (23), qui est disposée de manière à être déplacée vers l'extérieur contre le bord (4) du trou de plancher (21) lors de sa manoeuvre afin d'attacher l'oeillet (1) dans le trou de plancher (21).

9. Passage de plancher selon la revendication 8, **caractérisé en ce que** la mâchoire de serrage (23) est mobile axialement et est disposée pour être déplacée axialement par rapport au cadre d'insertion (2) de telle sorte que le collier (3) de celui-ci soit tiré contre le plancher (22) lors du montage.

10. Passage de plancher selon l'une quelconque des revendications 1 à 9, **caractérisé en ce que** l'objet de recouvrement (9) est formé sous forme de bloc de sortie (60) destiné à être monté entre les deux parties de recouvrement (7, 8) du passage de plancher (1).

11. Passage de plancher selon l'une quelconque des revendications 1 à 9, **caractérisé en ce que** l'objet de recouvrement (9) est formé sous forme d'attache de câble divisible (81) prévue pour être montée entre les deux parties de recouvrement (7, 8) du passage de plancher (1).

12. Passage de plancher selon la revendication 11, **caractérisé en ce qu'**au moins une partie de l'attache de câble (81) est pourvue d'une détente de contrainte (82).
